# EUROPEAN PATENT APPLICATION

(11) **EP 3 498 401 A1**
(43) Date of publication of application: **19.06.2019**
(21) Application number: 17208084.8
(22) Date of filing: 18.12.2017
(51) Int. Cl.: B22F 3/105, B33Y 10/00, B33Y 30/00, B33Y 50/00, B23K 26/03, B23K 26/342, B29C 64/153, B29C 64/393, B29C 64/282, B29C 64/277, B29C 64/268, B33Y 50/02

(54) **METHOD OF ADDITIVELY MANUFACTURING A COMPONENT, AN APPARATUS AND COMPUTER PROGRAM PRODUCT**

(71) Applicant: Siemens Aktiengesellschaft, 80333 München (DE)
(72) Inventor: Dallmann, Michael, 90530 Wendelstein (DE); Geisen, Ole, 10781 Berlin (DE)

(57) **Abstract**

A Method of additively manufacturing a component (100) is presented, the method comprising the steps of:
- defining a scanning path for the additive build-up of the component (100),
- guiding a first-type laser (1) along the scanning path over a layer of a base material (20) to pre-heat the base material,
- measuring a temperature of the base material (20) along the scanning path, and
- guiding a second-type laser (2) along the scanning path over the layer of base material (20) for selectively melting the base material, wherein an energy input of the second-type laser (2) heats the base material from a pre-heat temperature to its melting point (MP), wherein the energy input is controlled based on the information of the measured temperature in a closed-loop manner.

## Description

The present invention relates to a method of additively manufacturing a component, particularly by a selective powder bed fusion process, wherein the temperature of a base material of the powder bed and/or the irradiation of the powder bed with an energy source is carried out in a closed-loop manner. Further, a corresponding apparatus as well as a computer program or computer program product are described.

Preferably, the component denotes a component applied in a turbo machine, e.g. in the flow path hardware of a gas turbine. The component is, preferably made of a superalloy or nickel-based alloy, particularly a precipitation hardened or solution hardened alloy or any other comparable material comprising excellent mechanical strength, resistance to thermal creep deformation, good surface stability and resistance to corrosion and/or oxidation.

Alternatively, the component may relate to any other metallic or plastic component.

Additive manufacturing techniques inter alia comprise powder bed fusion methods, such as selective laser melting (SLM), selective laser sintering (SLS) or electron beam melting (EBM).

A method of selective laser melting is described in EP 2 601 006 B1, for example.

A procedure and an apparatus for in-situ monitoring and feedback control of selective laser powder processing are e.g. described in US 2009/0206065 A1.

Further, an additive manufacturing apparatus and a corresponding method is described in WO 2016/198885 A1.

Additive manufacturing methods have proven to be useful and advantageous in the fabrication of prototypes or complex and filigree components, such as lightweight design or cooling components comprising mazelike internal structures.

Particularly methods such as selective laser melting or selective laser sintering are known for fabricating, prototyping or manufacturing parts or components from powder material. Conventional apparatuses or setups for such methods usually comprise a manufacturing or build platform on which the component is built layer-by-layer after the feeding of a layer of base material which may then be melted, e.g. by the energy of a laser beam and subsequently solidified. The layer thickness is determined by a wiper that moves, e.g. automatically, over the powder bed and removes excess material. Typical layer thicknesses amount to 20 µm or 40 µm. During the manufacture, said laser beam scans over the surface and melts the powder on selected areas which may be predetermined in a CAD-file according to the geometry of the component to be manufactured. Before the actual powder bed fusion takes place, a dedicated CAM process usually slices parts of said CAD model into layers. During this CAM (computer aided manufacturing) process, irradiation parameters for the actual powder bed fusion process may also be defined in each layer.

In the given field, to reduce the manufacturing time, more and more powerful lasers will be used for the selective melting sintering process. The use of such powerful lasers is also driven by the trend to increase the manufacturing space in order to be able to manufacture ever larger components. The use of these lasers implies high temperature differences during the melt process which, in turn, results in differences of the melt pool and the resulting quality of the product or component.

Especially for the aircraft industry or corresponding aeroturbine engines it is necessary to ensure that you will - based on a given parameter set - reliably obtain the same quality of the component or a quality result in a defined range.

In case of using control means it is difficult to verify the quality of such a product, e.g. if the manufacturing device or machine will modify parameter sets internally, e.g. effected by (semi-)automated or self-learning algorithms or processes by which the machine is programmed.

A variation in process parameters such as scan speed or laser power will significantly affect the melt pool geometry and - to a certain extend - the aimed solidification process of the base material. Variations in process parameters can, thus, affect the density, the microstructure and, as a result thereof, the mechanical properties of the produced part or component itself. As a further difficulty, the temperature in the powder bed will vary depending on the estimated or predefined part geometry and the path of the laser.

State of the art additive manufacturing machines or devices do not provide a closed loop control for the print or manufacturing process. Different print jobs and parameter sets will, thus, have to be developed and tested before the production of the actual component can take place. To ensure the quality of the resulting product, a variety of quality checks will need to take place, including the build-up of test parts for destructive and non-destructive tests. E.g. a second laser will even have to be used to sinter the material before the actual melt process can take place.

It is an object of the present invention to provide means by which a temperature control and/or reliable and accurate control of the irradiation, melting and/or solidification process of a powdery base material for the component can be carried out.

The mentioned object is achieved by the subject-matters of the independent claims. Advantageous embodiments are subject-matter of the dependent claims.

An aspect of the present invention relates to a method of additively manufacturing a component comprising defining a scanning path for the additive build-up or manufacture of said component.

The method further comprises scanning or guiding a first type laser or electron beam along the scanning path over a layer of a base material or the powder bed to preheat the base material. Accordingly, the first type laser or electron beam may be an according heating means.

The method further comprises measuring a temperature, such as a preheating temperature, of the base material along the scanning path. The measuring can e.g. be carried out with a thermal sensor, e.g. by thermographic or comparable means. The measuring of the temperature of the base material is preferably carried out layerwise, i.e. preferably during or for the manufacture of each layer for the component.

The preheating temperature is expediently lower than a melting temperature (melting point) of the base material.

The method further comprises guiding a second type laser or electron beam along the scanning path over the layer of base material for selectively melting the base material, wherein an energy input of the second type laser or electron beam heats the base material from a preheating temperature to or above its melting point, wherein the energy input is controlled based on the information of the measured temperature in a closed-loop manner. In other words, the information of the measured temperature is fed back by according means to e.g. a controlling unit for guiding the second type laser or electron beam, such that the energy input necessary for melting the base material just to or slightly above its melting point can be accurately chosen or tailored.

As an advantage of the presented method, said energy input can be tuned to the local requirements and possible overheating of the base material can advantageously be avoided. This is particularly important as overheating can cause hot cracks during the manufacture of the single layers for the component. Furthermore, overheating can lead to adverse thermal effects and impede heat dissipation during the additive process. Thus, the presented means comprising both energy sources and the described temperature control help to increase process reproducibility and controllability. Thus, with the given means, crucial problems in the industrialisation of additive processes can be solved.

In an embodiment, the energy input of the second type laser or electron beam is chosen depending on the base material used and the predetermined geometry of the component. According to this embodiment, the applied energy input can be tailored to the given use case, i.e. the specifically used base material. Moreover, it may be accounted for the final geometry of the component, as e.g. a very fine or spatially resolved geometry may also locally corrupt or disqualify the microstructure of the component.

In an embodiment, the second type laser or energy beam is a melting laser or - as the case may be - an electron beam for melting the base material. Said melting beam, is, according to this embodiment, configured with a lower power or lower power density as compared to conventional melting lasers or electron beams for the respective selective laser melting process. This allows the overall manufacturing device to be dimensioned more moderate, e.g. with a lower energy consumption, wherein at the same time, the melting point and/or the melt pool for the solidification of the powder can be adjusted more easily.

Especially in the case of electron beam melting as the underlying powder bed fusion process and the use of an according electron beam as melting beam, melt pool sizes are very difficult to determine, to control or to measure. Thus, the presented means enable also measurement and/or control of the corresponding melt pool which leads to a better process understanding.

In an embodiment, the first type laser or electron beam has a larger spot diameter, e.g. larger than 150 µm, than the second type laser or electron beam, having e.g. a spot diameter of equal less than 150 µm. This particularly enables to homogenize temperature distribution in the base material, as a larger portion thereof can be held at a given temperature.

In an embodiment the second type laser or electron beam is defocused and/or e.g. delayed or offset temporarily or spatially as compared to the first type laser or electron beam. For instance, the spot of the heating beam, such as the heating laser or heating laser beam may range from 200 µm to 1 mm, whereas the spot of the melting beam, such as the melting laser or a melting laser beam may range from 50 to 200 µm.

In an embodiment, the first type laser or electron beam is guided at a speed of two to five times the speed of the second type laser or electron beam. E.g. the scanning speed of the first type laser may amount to around 5000 mm/s, whereas the speed of the second type laser may amount to approximately 600 mm/s.

In an embodiment, the beam of the first type laser is guided in e.g. continuous loops over a surface of the base material or powder bed in order to heat the same. However, it is preferred that the spots of the first type laser or electron beam and the second type laser or electron beam on the powder bed overlap, such that the actual area of the base material which is to be melted is also heated prior to the melting and/or solidification process.

In an embodiment, at least one further energy beam, such as a first type laser is used for preheating the component or the respective layer thereof prior to the solidification. According to this embodiment, a surface of the powder bed can be preheated in a more comprehensive way. Additionally, too quick cooling rates or temperature gradients can be avoided which is particularly important in the additive manufacture of superalloys, wherein large temperature gradients may cause adverse microstructure.

In an embodiment, the first type laser or a further laser of the same kind is used for post heating the component or the respective layer thereof, e.g. after a solidification of the base material. This embodiment is also favourable in order to avoid (too) quick cooling rates or temperature gradients and adverse or defect-prone microstructure of the component may effectively be avoided. Thus, a route may be provided to enable the welding or powder bed manufacture of hard to weld materials, such as Inc738 and/or materials which can currently not be welded at all, such as alloy247 or similar materials.

In an embodiment, the temperature of the base material and/or powder bed is observed or surveyed with a thermal diode which is moved in correlation with the first and/or the second laser or electron beam and/or with a thermal camera which is placed in a build chamber. According to this embodiment, the temperature measurement can be correlated to the measurement or guiding of the first type and the second type energy beam.

In an embodiment, a measured temperature information of the layer is stored and associated to a 3D model of digital twin of the component. Said temperature information may e.g. be archived for each physical and solidified layer of the component. According to this embodiment, the measured temperature information may be further used or processed, whereby process control information may be derived from and improved by the collected data of the temperature measurement.

In an embodiment, when the measured temperature or temperature level exceeds a predetermined threshold location of such a hotspot is stored in the model and an alarm is generated. An alarm is expediently only generated, when the temperature in the powder bed exceeds a level which would cause significant adverse defects in the final structure of the component. Said hotspots may particularly be unpredictable as temperature or thermal development in the manufacture of the component during the build-up strongly depends on the (layerwise) cross section of the geometry of the component, and e.g. the build height.

In an embodiment, the method comprises a simulation of an estimated warming of the base material and/or computer aided engineering means, such as melt pool dynamics or corresponding calculations for defining the scanning path of the second type laser or electron beam. A simulation of the melt pool could be used to control the melt process in a better way without comprehensively knowing the temperature conditions. Such a simulation has to take care about the printer or device itself, e.g. use of protective gas supply, current laser power and further parameters.

Further aspect of the present invention relates to a computer program or computer program product comprising instructions to cause an additive manufacturing machine or device or a corresponding control unit or apparatus to execute the steps of the defining, the scanning of the first type laser or electron beam and a scanning of the second type laser or electron beam according to the described method. The control unit is configured to establish a closed-loop control of the described energy input and/or temperature control of the base material during the manufacture of the component.

A further aspect of the present invention relates to an apparatus or device or machine for additive manufacturing comprising a control unit, the first type laser or electron beam, the second type laser or electron beam and a thermal sensor as described, wherein the control unit is configured to execute the steps of the defining the guiding of the first type laser or electron beam and the guiding of the second type laser or electron beam according to the described method.

Advantages or embodiments relating to the described method and/or the described apparatus may as well pertain to the computer program product as described, and vice versa.

Further features, expediencies and advantageous refinements become apparent from the following description of the exemplary embodiment in connection with the Figures.
Figure 1 shows a schematic sectional view of a build platform and the component manufactured on top thereof by a selective melting method, wherein the powder bed is exposed to a first type laser and the second type laser.
Figure 2 shows a schematic top view of a powder bed of a base material for the component.
Figure 3 shows a schematic flow chart of method steps of a method according to the present invention.

Like elements, elements of the same kind and identically acting elements may be provided with the same reference numerals in the Figures.

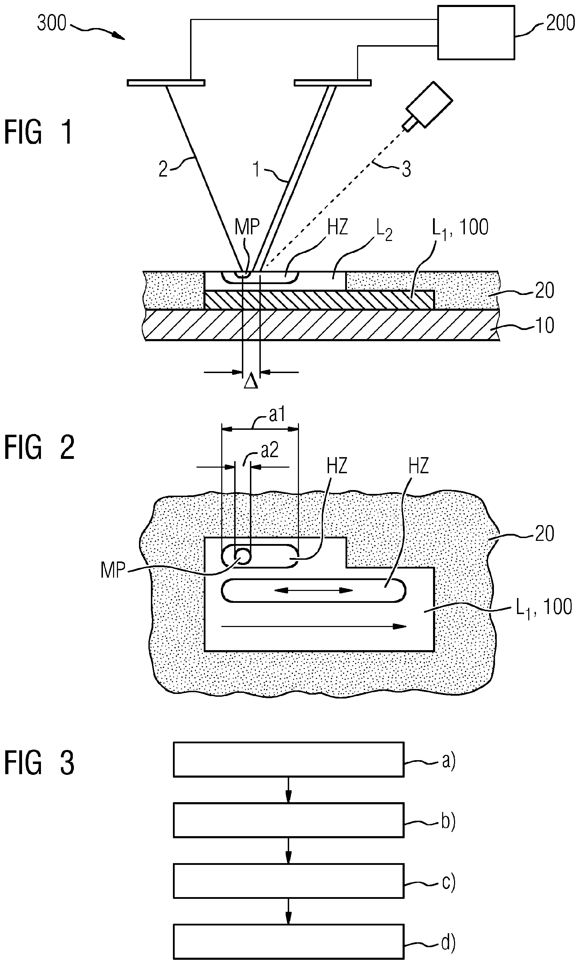

Figure 1 shows - in a schematic side or sectional view - an additive manufacturing device or apparatus 300. The device 300 comprises inter alia a build plate or platform 10. The build plate 10 is at least partly covered with a base material 20, particularly a powder, for the additive manufacture of a component 100.

The component 100 is preferably manufactured by a powder bed fusion method, such as selective laser melting or electron beam melting. This is usually done by the layerwise selective irradiation of the powder or base material 20 by an energy beam, such as a laser beam or electron beam.

The regions to be irradiated by the energy beam for the selective melting/sintering and subsequent solidification out of the powder bed are usually further determined by construction data, such as a CAD file. Said geometry is then - based on the CAD file - preferably divided or sliced into several layers and the irradiation of vectors or paths are determined by a computer aided manufacturing (CAM) process. Once possibly converted CAM data are fed into an additive manufacturing device or machine or its control unit (cf. numeral 200), the actual manufacturing or build-up process of the component 100 may start.

In Figure 1, a first layer L₁ for the component 100 has already selectively been built up in a previous manufacturing step.

Afterwards a new base material layer of the powder 20 has been distributed on top of the build plate 10 and/or the layer L₁ for building up a new layer L₂ on top of layer L₁.

According to the present invention, preferably each layer of or for the component 100 is selectively preheated or melted with the aid of two different energy beams, favorably first energy beam 1 and a second energy beam 2.

Instead of using laser beams for the first and the second energy beam, is also possible to choose an electron beam instead of one or two of the mentioned energy beams indicated with numerals 1, 2 in Figure 1.

When, in the following, it is referred to a laser beam it may as well be referred to in electron beam without loss of generality.

The first or first type laser 1 is a heating or preheating laser which may be guided or scans over the powder bed according to a predetermined pattern or scanning path in order to (solely) preheat the base material 20. Thereby, however, the melting point of the base material 20 is preferably not reached or exceeded. The trace or spot of the first type laser 1 on the powder bed 20 is preferably indicated with HZ for heating zone.

The second or second type laser 2 is preferably a melting laser which may be guided or scans over the powder bed 20 according to the same scanning path as the first type laser 1 in order to selectively melt the base material 20 in the laser focus, thereby generating a melt pool MP. The energy input of the second type laser 2 is added to that one of the first type laser 1 in the region of the melt pool MP, whereby the base material 20 is heated or warmed from preheating temperature to or above its melting point for the solidification of the different layers L₁, L₂ of the component 100.

According to the present invention, the temperature of the base material 20 (powderbed) is preferably measured for each layer along or in correlation with said scanning path. The measurement is preferably carried out with a thermal sensor 3, diode or comparable means. The thermal sensor or diode 3 may be arranged in a build chamber (not explicitly indicated) of the apparatus 300.

With the aid of said temperature measurement, the above-mentioned energy input is controlled based on the information of the measured temperature in a closed-loop manner, whereby the heat or energy input originating from the first and the second type laser 1, 2 can be accurately controlled. Hence, overheating and structural defects of the final component can be avoided.

Expediently, the temperature is measured in a region of the heating zone HZ, which was not already reached by the second type laser 2 or the melt pool MP, such that the power of the second laser 2 may still be controlled in order to just accurately approach or exceed the melting point of the base material 20.

The energy input, as mentioned, is preferably chosen and/or controlled depending on the base material type, e.g. alloy or material composition as well as on the actual part or component geometry. This is important, as e.g. a very small or filigree features of the component 100 or overhangs respond to a given energy input with defects or adverse microstructure which would not be the case when the same energy input were applied just to a bulk region of the component 100.

As the second type laser 2 is preferably only adding that one energy input or dose which increases the temperature of the powder bed in the heating zone HZ above the melting point MP (melt pool), the second type laser 2 may be dimensioned with a lower laser power as compared to the first type laser 1.

As seen in the sectional view of Figure 1, the first type laser 1 may have a larger spot diameter as compared to the second type laser 2.

The laser spot or focus of the first type laser 1 may equal to a size or diameter of the heating zone HZ.

The laser spot or focus of the second type laser 2 may equal to a size or diameter of the melt pool MP.

In other words, the lateral dimension of the heating zone HZ of the second type laser 2 as compared to the melt pool MP the first type laser 1 may be facilitated by defocusing the second type laser 2 as compared to the first type laser 1.

The beam spot or laser spot of the second type laser 2 may range from 200 µm to 1 mm for example. Preferably, the beam spot ranges from 200 µm to 500 µm.

On the other hand, the beam spot, laser spot or melt pool MP dimension generated by the first type laser 1 may range from 70 to 200 um, for example. Preferably, said laser spot may range from 70 to 120 µm.

As indicated in Figure 1, the melt pool MP or spot of the second type laser 2 preferably overlaps with the heating zone HZ or spot of the first type laser 1 (cf. also top view if Figure 2). As shown in Figure 1, the melt pool MP is further temporarily (and/or spatially) offset from the heating zone HZ or its centre, e.g. by a spatially or temperature difference Δ which may have a range from 0 to 100 µm or as the case may be from 0 to 500 microseconds, preferably 200 µs or less.

Additionally or alternatively, the first type laser 1 may be guided over the powder bed 20 it a speed of two to five times the speed of the second type laser 2 for solidification of each layer of the component 100.

The speed of the first type laser 1 may be varied for the preheating of each layer (L₁, L₂) of the component 100. The first type laser 1 may e.g. be guided in continuous loops over the powder bed 20 in order to reliably preheat the major fraction of the powder bed 20.

An average or maximum speed of the first type laser 1 may amount to 5000 mm/s, for example. On the other hand, an average or typical speed of the laser beam of the second type laser 2 may amount to 600 µm/s, for example.

Aside from the indication of Figure 1, a corresponding machine or additive manufacturing device 300 may comprise two or even more first type lasers 1 (see Figure 2), wherein the further first type laser 1 may also be used for preheating a layer L₁, L₂ of base material 20 for the component 100.

Additionally or alternatively, the further first type laser 1 may as well be used for post-heating, wherein said first type laser beam may as well be tracked or retraced with regard to the second type laser 2, e.g. to avoid adverse or unfavorable cooling rates during the additive build-up of the component 100.

Figure 2 shows a schematic top view of the powder bed 20, wherein, the dimension of the heating zone HZ as indicated. Further, a dimension of the melt pool MP is shown, wherein a2 is smaller than a1. As mentioned above, a further heating zone HZ separated from the heating zone around the melt pool MP is shown in Figure 2 which may be generated by a second or further first type laser 1.

A measured temperature information rendered from the thermal sensor 3 for example may be stored or archived in an associated 3D model or digital twin data base. Said storage or archiving may be performed by a control unit 200 as shown in Figure 1.

When, e.g. the temperature level in the powder bed 20 exceeds a predetermined threshold, a location of such hotspot may be stored together with an information of the location of said hotspots in the storage or model and an alarm may be generated, e.g. prior to the actual (re-)melting of the base material 20, i.e. when the second type laser 2 has not yet reached the region in the powder bed for which the temperature was measured. This may be carried out with the aid of simulation, data analytics, state-of-the-art means of additive build processors, melt pool dynamics and/or further means. Thus, the closed-loop functionality generally allows for defining of an optimal scanning path for each component geometry. The double arrow in the lower heating zone HZ in Figure 2 indicates that said first type laser 1 may be guided over the powder bed 20 in loops and/or move according to any lateral (x, y) direction in order to effectively preheat the powder bed 20.

The lower arrow directing to the right in Figure 2 schematically indicates a further irradiation path which may be scanned according to which the first type laser 1 and the second type laser 2 may be guided to solidify the base material for the component 100.

Figure 3 shows a schematic flow chart indicating method steps according to the present invention as described above.

Said method is a method of additively manufacturing the component 100 comprising the steps of:
- a) defining a scanning path for the additive build-up of the component 100
- b) guiding a first-type laser 1 along the scanning path over a layer of a base material 20 to pre-heat the base material 20,
- c) measuring a temperature of the base material 20 along the scanning path, and
- d) guiding a second-type laser 2 along the scanning path over the layer of base material 20 for selectively melting the base material, wherein an energy input of the second-type laser 2 heats the base material from a pre-heat temperature to its melting point MP, wherein the energy input is controlled based on the information of the measured temperature in a closed-loop manner.

The functionality of the presented invention proposes control of the temperature and uses several lasers 1, 2 to increase the temperature in a more accurate or moderate way.

The thermal sensor 3 will be used to measure the temperature along the laser or scanning path (not explicitly indicated).

Said scanning path(s) is/are preferably defined by the movement or guidance of the first and/of the second laser spots.

Based on this information of the temperature measurement, the (preheating) temperature in the heating zone HZ will be increased to a certain extent by the first laser 1. The temperature level can be parameterized depending on the material used. The first type laser 1 will preferably not melt the powder 20 but ensures accurate pre-heating in a controlled way. Afterwards the second type laser 2 will take over the melting of the preheated base material up to its melting point as described. Due to the fact, that the powder is preheated to a certain degree, the second laser 2 does not need a very high power for the melt process, which allows to have a better control over the whole melting and solidification process. The presented kind of pre-heating ensures a more or less constant heating of the area which has to be melted.

Both lasers 1, 2 have to be combined in such a way, that these lasers will use the (same) scanning path. The second laser 2 may be delayed in time, wherein the difference between the first type laser 1 and the second type laser 2 may be parameterized or accounted for by said closed-loop functionality.

The first type or heating laser 2 may be a non-working laser which can also be used to heat the solidified paths if the temperature drops too quickly (see above). In this case, it is not only used for pre- but may also be applied for post-heating. This can be useful for hard-to-weld alloys which tend crack when cooling down.

According to the present invention, it is further perceivable to provide for a combination of lasers or a laser ensemble which heats the powder bed before and after the actual melting process - based on the signal of the thermal sensor 3. Instead of only one thermal sensor, a plurality of thermal sensors can be applied as well, each of which preferably measuring a temperature of the heating zone HZ.

Generally, the temperature measurement may not only be used to determine the power or parameters of the first type laser 1, but also the ones of the second type laser 2.

E.g., an "on-axis" thermal diode 3 may be located according to measure or probe the temperature in the laser or scanning path or heat affected zone HZ. Said diode can, thus, be used to monitor the area directly surrounding the melt pool MP or heating zone HZ.

An "off-axis" diode or a thermal camera may as well be placed in the build chamber to monitor the temperature of the entire build plate 10 or powder bed 20.

These diode embodiments can also be combined.

The first type, preheating or non-working laser(s) 1 has preferably a larger spot diameter (e.g. >150µm) or be slightly out of focus to cover a larger area as shown in the Figures. Thereby, a flat laser profile is preferred over a Gaussian profile.

The measured temperature values as mentioned above are preferably used to give an overview of the temperature distribution before the actual melt process takes place.

In case of exceeding the temperature level for the first laser 1, the area may be marked in the data model or data base (cf. above) and an alarm may be generated.

In case of using (base) materials which need to increase the temperature in several steps in order to allow for the desired microstructure or material phases (e.g. in case of "hard-to-weld" or conventionally non-weldable alloys), a number of (first type) lasers 1 may be used to for preheating.

It is to be understood that the thermal sensor 3 has to track the temperature along the laser or scanning path.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Method of additively manufacturing a component (100) comprising the steps of:
- defining a scanning path for the additive build-up of the component (100),
- guiding a first-type laser (1) along the scanning path over a layer of a base material (20) to pre-heat the base material (20),
- measuring a temperature of the base material (20) along the scanning path, and
- guiding a second-type laser (2) along the scanning path over the layer of base material (20) for selectively melting the base material (20), wherein an energy input of the second-type laser (2) heats the base material (20) from a pre-heat temperature to its melting point, wherein the energy input is controlled based on the information of the measured temperature in a closed-loop manner.

2. Method, according to claim 1, wherein the energy input of the second-type laser (2) is chosen depending on the base material (20) used and the predetermined geometry of the component (100).

3. Method, according to one of the previous claims, wherein the second-type laser (2) is a melting laser being configured with a lower power or power density as compared to conventional melting lasers for selective laser melting.

4. Method, according to one of the previous claims, wherein the first-type laser (1) has a larger spot diameter (a1) than the second-type laser (1, a1).

5. Method, according to one of the previous claims, wherein the second-type laser (2) is defocused as compared to first-type laser (1).

6. Method, according to one of the previous claims, wherein the first-type laser (1) is guided at a speed of two to five times the speed of the second-type laser (2).

7. Method, according to one of the previous claims, wherein at least one further laser is used for pre-heating the component (100).

8. Method, according to one of the previous claims, wherein the first-type laser (1) is used for post-heating the component after a solidification of the base material.

9. Method, according to one of the previous claims, wherein the temperature is measured with a thermal diode (3) which is moved in correlation with the first and/or the second laser (1, 2) and/or with a thermal camera which is placed in a build chamber.

10. Method, according to one of the previous claims, wherein a measured temperature information of the layer (L₁, L₂) is stored and associated to a 3D-model of the component (100).

11. Method, according to claim 10, wherein - when the temperature exceeds a predetermined threshold - a location of such a hot spot is stored in the model and an alarm is generated.

12. Method, according to one of the previous claims, comprising a simulation of a warming of the base material (20) and/or melt pool dynamics for defining the scanning path of the second-type laser (2).

13. Computer program product comprising instructions to cause an additive manufacturing device (300, 200) or a corresponding control unit to execute the steps of the defining, the scanning of the first-type laser and the scanning of the second-type laser (2) according to the method of one of the previous claims.

14. Apparatus (300) comprising a control unit (200), a first-type laser (1), a second-type laser (2) and a thermal sensor (3), wherein the control unit (200) is configured to execute the steps of the defining, the guiding of the first-type laser (1) and the guiding of the second-type laser (2) according to the method of one of the previous claims.
